# EUROPÄISCHE PATENTSCHRIFT

(11) **EP 3 870 465 B1**
(45) Veröffentlichungstag und Bekanntmachung des Hinweises auf die Patenterteilung: **16.03.2022**
(21) Anmeldenummer: 20700647.9
(22) Anmeldetag: 07.01.2020
(51) Int. Cl.: B60H 1/00, B60H 1/34

(54) **LAGERANORDNUNG UND LUFTAUSSTRÖMER MIT EINER SOLCHEN LAGERANORDNUNG**
BEARING ARRANGEMENT AND AIR VENT HAVING SUCH A BEARING ARRANGEMENT
ENSEMBLE DE PALIERS ET DIFFUSEUR D'AIR COMPRENANT UN ENSEMBLE DE PALIERS DE CE TYPE

(30) Priorität: 10.01.2019 DE 102019100496
(43) Veröffentlichungstag der Anmeldung: 01.09.2021
(73) Patentinhaber: Dr. Schneider Kunststoffwerke GmbH, 96317 Kronach-Neuses (DE)
(72) Erfinder: KAMM, Daniel, 96264 Altenkunstadt (DE); HORNER, Dominic, 96317 Kronach (DE)
(86) Internationale Anmeldenummer: PCT/EP2020/050199
(87) Internationale Veröffentlichungsnummer: WO 2020/144174

(56) Entgegenhaltungen:
- EP-A1- 1 086 838
- EP-A2- 2 602 137
- DE-A1- 2 012 000

## Beschreibung

Es werden eine Lageranordnung und ein Luftausströmer mit einer solchen Lageranordnung beschrieben.

Die Lageranordnung kann bspw. einen Luftausströmer für Fahrzeuge betreffen, wobei eine erste Lagerkomponente der Lageranordnung ein Luftleitelement, bspw. eine Lamelle, und eine zweite Lagerkomponente der Lageranordnung ein Hebel ist, die an einem Gehäuse des Luftausströmers drehbar gelagert sind. Die Lageranordnung kann auch eine Drosselklappe eines Luftausströmers betreffen, die zur Regelung der zugeführten Luft dient und hierzu an einem Gehäuse drehbar gelagert ist. Über den Hebel kann die Lageranordnung bspw. mit einem Mitnehmer zur Übertragung von Drehbewegungen und/oder zur Kopplung mit weiteren Elementen, wie bspw. Lamellen, gekoppelt sein.

### Hintergrund

Luftausströmer dienen zur Ablenkung von ausgegebener Luft, die von einer Klimaanlage oder einer anderen Belüftungseinrichtung zur Verfügung gestellt wird. Luftausströmer werden insbesondere bei Fahrzeugen dazu verwendet, um Frischluft, temperierte Luft und/oder klimatisierte Luft in den Fahrgastraum eines Fahrzeugs zu bringen. Fahrzeuge können bspw. Kraftfahrzeuge, wie PKW, LKW oder Busse, Züge, Flugzeuge oder Schiffe sein. Luftausströmer können bspw. in einem Fahrzeugarmaturenbrett oder im Bereich der A-, B- oder C-Säule oder am Dach eines Kraftfahrzeuges angeordnet sein.

Lageranordnungen werden beispielsweise bei Luftausströmern dazu eingesetzt, um Lamellen schwenkbar zu lagern. Dabei kommt es vor allem auf die spielfreie Lagerung der Lamelle relativ zum Gehäuse des Luftausströmers als auch auf die Kraftübertragung zum Verschwenken der Lamelle an.

### Stand der Technik

Konventionelle Lageranordnungen für Luftausströmer weisen hierzu beispielsweise Koppelstangen auf, welche die Lamellen zueinander und gegenüber einer Gehäusewand verspannen. Zudem sind auch Einrichtungen bekannt, wobei Lagerzapfen von Lamellen außerhalb eines Gehäuses abgestützt sind.

Die bekannten Ausführungen weisen jedoch verschiedene Nachteile auf. Die Krafteinleitung zum Verschwenken muss in der Regel innerhalb eines Luftkanals im Gehäuse des Luftausströmers erfolgen, wobei hierzu auf eine Lamelle beispielsweise ein Hebel wirkt, der verschwenkbar um eine parallel zur Schwenkachse verlaufende Achse auf die Lamelle wirkt. Solche Einrichtungen in einem Luftkanal führen zu einer ungewollten Luftablenkung und können zudem störende Geräusche beim Durchströmen von Luft verursachen.

Abhilfe kann geschaffen werden, wenn die Drehbewegung außerhalb des Luftkanals über die Lamelle, vorzugsweise über den Lagerzapfen der Lamelle, eingebracht wird. Hierzu müsste der Lagerzapfen einen verhältnismäßig großen Durchmesser aufweisen, was aus fertigungstechnischer Sicht sehr enge Toleranzen zur Gewährleistung einer Drehbewegung ohne Spiel und ohne Überschneidung erforderlich macht. Derart ausgebildete Lagerzapfen lassen sich jedoch wirtschaftlich nicht realisieren.

Ein enorm großer Anteil an Ausschuss wäre dabei die Folge. Alternativ wäre die Herstellung solcher Lamellen bzw. die Ausbildung von solchen Lagerzapfen an Lamellen nur mit einem sehr großen Aufwand umsetzbar.

In DE 200 19 038 U1 ist ein Ausströmer mit simultan verstellbaren Lamellenelementen beschrieben. Die Drehung der Lamellen erfolgt über Lagerzapfen an deren Stirnseiten, die als Drehachse fungieren. Der simultane Antrieb der einzelnen Lamellen erfolgt über ebenfalls an den Stirnseiten der Lamellen angeordnete Exzenterzapfen. Die Exzenterzapfen und somit die Lamellen sind untereinander mit einem Verbindungsorgan verbunden. Die Lager- und Exzenterzapfen ragen durch Aussparungen in den Seitenwänden des Ausströmergehäuses, wobei für die Lagerzapfen Bohrungen und für die Exzenterzapfen Langlöcher vorgesehen sind. Das Verbindungsorgan ist außerhalb des Gehäuses angeordnet.

US 5,470,276 A offenbart einen Diffus-Ausströmer mit verstellbaren Lamellen. Zwei Gruppen von Lamellen sind jeweils über erste Zapfen und ein Koppelglied miteinander verbunden und vollführen dadurch simultane Bewegungen. An jeder Gruppe von Lamellen ist jeweils ein weiterer Zapfen vorgesehen, der durch ein Langloch durch das Ausströmergehäuse ragt und mit einer Stellscheibe verbunden ist. Durch Verdrehen der Stellscheibe vollführen die beiden Gruppen von Lamellen Schwenkbewegungen in unterschiedliche Richtungen, wodurch ein Aufweiten des austretenden Luftstroms erfolgen kann.

Die EP 1 086 838 A1 offenbart eine zu einer Klimaanlage eines Fahrzeug gehörigen Dämpfungseinrichtung, die dazu dient, verschiedene Luftströme zu schalten, insbesondere Temperatureinstellungen durch öffnen und schließen von Einund Auslassöffnungen vorzunehmen. Hierbei ist vorgesehen, eine Dämpferklappe drehbar um einen Lagerzapfen an einem Durchlass eines Gehäuses zu lagern. Über einen auf diesem Lagerzapfen angebrachten Hebel kann die Dämpferklappe verschwenkt und der Durchlass verschlossen oder freigegeben werden.

Die DE 20 12 000 A1 offenbart eine Belüftungsvorrichtung mit einer verstellbaren Ventileinrichtung, welche als um eine Achse drehbare Klappe in einem Gehäuseschacht ausgebildet ist. Die Ventileinrichtung ist auf einer Welle angebracht, die mit einem Zapfen mit quadratischen Querschnitt versehen ist, der in einem entsprechenden Loch der Ventileinrichtung sitzt.

Durch Antrieb eines Zahnkranzes, der an die Welle angeformt ist, wird eine Verstellung der Ventileinrichtung ermöglicht. EP 2 602 137 A2 zeigt eine Luftauslassvorrichtung mit rotierbar in einem Gehäuse angeordneten Lamellen zur Beeinflussung der Strömungsrichtung eines Luftstroms. Eine Lamelle weist einen Lagerzapfen auf, der in einer Kulissenführung einer Wand aufgenommen ist, aus der Kulissenführung herausragt und in einer andersgeformten Kulissenführung eines Führungsblicks aufgenommen ist. Der Führungsblock ist schiebebeweglich an der Wand gehalten. Durch Verschieben des Führungsblocks erfolgt eine Verlagerung des Lagerzapfens innerhalb der zwei Kulissenführungen, wodurch die Lamelle verschwenkt wird.

### Aufgabe

Gegenüber den bekannten Ausführungen besteht die Aufgabe der vorliegenden Erfindung darin, eine Lösung anzugeben, welche eine verbesserte Lageranordnung, insbesondere für Lagerkomponenten wie Lamellen und Drosselklappen, angibt, die einfach ausgebildet ist und bei einfacher Ausbildung der Lageranordnung eine Drehmomentübertragung zum Verschwenken der Lagerkomponenten bereitstellt.

### Lösung

Die vorstehend genannte Aufgabe wird erfindungsgemäß durch eine Lageranordnung mit einer ersten Lagerkomponente, aufweisend einen Lagerzapfen und einen Koppelzapfen, und einer zweiten Lagerkomponente gelöst, die an einer Wand um eine gemeinsame Drehachse drehbar gelagert sind, wobei
- der Lagerzapfen sich längs der Drehachse und der Koppelzapfen exzentrisch zur Drehachse erstrecken,
- der Lagerzapfen in einer Lageröffnung der Wand aufgenommen ist,
- der Koppelzapfen in einer Führungskulisse der Wand aufgenommen ist und aus der Führungskulisse herausragt,
- die zweite Lagerkomponente eine erste Öffnung, in welcher der Lagerzapfen aufgenommen ist, und eine exzentrisch zur ersten Öffnung angeordnete zweite Öffnung aufweist, in welcher der Koppelzapfen aufgenommen ist,
- der Lagerzapfen über ein Rastmittel mit der zweiten Lagerkomponente verbunden ist, und
- sich die zweite Lagerkomponente an dem Koppelzapfen abstützt.

Der Lagerzapfen der ersten Lagerkomponente ist in der Lageröffnung der Wand drehbar gelagert und über das Rastmittel mit der zweiten Lagerkomponente verbunden. Das Rastmittel kann durch eine spezielle Ausbildung am Lagerzapfen der ersten Lagerkomponente und/oder durch eine spezielle Ausbildung im Bereich der ersten Öffnung der zweiten Lagerkomponente ausgeführt sein. Die Verrastung stellt im Zusammenspiel mit der Lagerung der zweiten Lagerkomponente am Koppelzapfen sicher, dass ein Spielausgleich für die Kopplung der ersten Lagerkomponente und der zweiten Lagerkomponente bereitgestellt wird. Dadurch kann auch eine Sicherung der ersten Lagerkomponente an der Wand bereitgestellt werden. Dabei stützt sich die zweite Lagerkomponente über den Abschnitt mit der zweiten Öffnung am Koppelzapfen ab und wird über den Abschnitt mit der ersten Öffnung über das Rastmittel am Lagerzapfen gehalten.

Diese Abschnitte der zweiten Lagerkomponente können relativ zueinander verlagert bzw. gespannt werden, so dass ein Spielausgleich erreicht wird. Somit ist über die zweite Lagerkomponente ein Drehmoment auf die erste Lagerkomponente übertragbar, wobei die Ausbildung des Lagerzapfens einfach gehalten ist und keine engen Toleranzen eingehalten werden müssen. Das Abstützen am Koppelzapfen erfolgt in entgegengesetzter Richtung zum Abstützen am Rastmittel. Die Lageranordnung ermöglicht damit die Übertragung einer Drehbewegung ohne Spiel.

Über den Koppelzapfen wird eine Drehmomentübertragung erreicht, ohne dass hierfür speziell ausgebildete Lagerzapfen erforderlich sind. Die Fertigungstoleranzen für den Lagerzapfen können daher breiter ausfallen. Darüber hinaus kann der Lagerzapfen geringe Durchmesser aufweisen, weil dieser nicht zur Drehmomentübertragung zum Verdrehen oder Verschwenken der ersten Lagerkomponente herangezogen wird.

Die Befestigung der ersten Lagerkomponente an der Wand erfolgt durch ein Einsetzen des Lagerzapfens in die Lageröffnung und des Koppelzapfens in die Kulisse. Anschließend wird die zweite Lagerkomponente so auf die erste Lagerkomponente aufgesetzt, dass der Lagerzapfen in der ersten Öffnung der zweiten Lagerkomponente und der Koppelzapfen in der Kulisse der zweiten Lagerkomponente aufgenommen sind.

Die erste Lagerkomponente und die zweite Lagerkomponente sind spielfrei zueinander gelagert, wodurch ein Klappern ausgeschlossen wird, und wobei zusätzlich eine Übertragung der Drehbewegung über den Koppelzapfen durchführbar ist.

Es kann eine spielfreie Lagerung der ersten Lagerkomponente an der Wand erreicht werden, wobei sich die erste Lagerkomponente und die zweite Lagerkomponente auf gegenüberliegenden Seiten an der Wand abstützen. Dabei ermöglicht die gefederte Lagerung der zweiten Lagerkomponente, dass sich die erste Lagerkomponente an der Wand abstützen kann und zugleich spielfrei gelagert ist, weil der durch die Lageröffnung ragende Lagerzapfen und der durch die Führungskulisse ragende Koppelzapfen auf der gegenüberliegenden Seite der Wand mit der zweiten Lagerkomponente verbunden sind, die wiederum über den Koppelzapfen und den Lagerzapfen gespannt ist, und sich zur spielfreien Lagerung an der gegenüberliegenden Seite der Wand abstützt. Das Abstützen der zweiten Lagerkomponente an der Seite der Wand, welcher der Seite gegenüberliegt, an der sich die erste Lagerkomponente abstützt, kann durch einen beliebigen Abschnitt der zweiten Lagerkomponente erfolgen. Bspw. kann die zweite Lagerkomponente hierzu einen gesonderten Abschnitt oder ein gesondertes Mittel aufweisen, das vorzugsweise einem der Abstützpunkte der zweiten Lagerkomponente an der ersten Lagerkomponente gegenüberliegt.

Die zweite Lagerkomponente kann sich gefedert an dem Koppelzapfen abstützen. Hierzu kann die Wand ein erstes Anlageelement aufweisen. Das erste Anlageelement kann bspw. an die Wand angeformt sein. Es ist möglich, das erste Anlageelement in einem 2-Komponenten Spritzgussverfahren aus einem weicheren Material an die Wand anzuspritzen, welche gegenüber dem ersten Anlageelement aus einem härteren Material besteht. Das erste Anlageelement kann bspw. aus einem thermoplastischen Elastomer bestehen. In weiteren Ausführungen kann das erste Anlageelement als gefedertes Element ausgeführt sein, das von der Wand absteht und in Richtung der Wand gedrückt werden kann. Die gefederte Lagerung unterstützt den spielfreie Verrastung.

Bspw. kann sich die zweite Lagerkomponente auch über einen (teil-)ringförmigen Abschnitt an der Wand abstützen, welcher die erste Öffnung der zweiten Lagerkomponente mindestens teilweise umgibt. Dieser Abschnitt kann ferner bspw. in Richtung der Wand ragen und dabei von der Oberfläche der zweiten Lagerkomponente abstehen.

Das Schließmaß zwischen erster Lagerkomponente, zweiter Lagerkomponente und/oder Wand kann als Übergangs- oder Übermaßpassung ausgeführt sein. Hierdurch wird sichergestellt, dass die erste Lagerkomponente spielfrei an der Wand gelagert ist. Der Ausgleich erfolgt über die gefederte Lagerung der zweiten Lagerkomponente am Koppelzapfen, am Lagerzapfen und dem Abstützen an der Wand. Es existieren mehrere Schließmaße zwischen erster und zweiter Lagerkomponente, wobei über die Wand ebenfalls das Spiel aus der Lamelle genommen wird, damit diese sich in ihrer Längsrichtung nicht mehr verschiebt. Der Lagerzapfen der ersten Lagerkomponente kann ferner eine Spielpassung zur Lageröffnung in der Wand aufweisen. Durch die gefederte Lagerung der zweiten Lagerkomponente wird trotz der Spielpassung sichergestellt, dass die erste Lagerkomponente und die zweite Lagerkomponente spielfrei zueinander und spielfrei gegenüber der Wand gelagert sind. Eine Verlagerung der ersten Lagerkomponente in Richtung der Drehachse wird dadurch verhindert. Ein Spiel orthogonal zur Drehachse wird auch über das Rastmittel ausgeglichen.

Der Koppelzapfen kann mindestens eine Schulter aufweisen, an der sich die zweite Lagerkomponente abstützt. Die mindestens eine Schulter erstreckt sich orthogonal zur Längsachse des Koppelzapfens und bildet eine Anlagefläche für einen Bereich der zweiten Lagekomponente, welcher die zweite Öffnung der zweiten Lagerkomponente umgibt.

Der Lagerzapfen kann als Rastmittel ein Rastelement aufweisen, das gegenüber einem entlang der Drehachse sich anschließenden Lagerabschnitt einen größeren Durchmesser aufweist, der größer ist als der Durchmesser der ersten Öffnung der zweiten Lagerkomponente, und wobei das Rastelement die erste Öffnung der zweiten Lagerkomponente hintergreift. Bspw. weist das Rastelement einen Pilzkopf auf, der ein einfaches Verrasten ermöglicht. Ein Pilzkopf weist einen sich verbreiternden Kopf mit einer im Wesentlichen planen Rastfläche orthogonal zur Drehachse des Lagerzapfens auf, wodurch ein Einsetzen des Lagerzapfens durch die Ausbildung des Pilzkopfs einfach ohne großen Kraftaufwand möglich ist und nach dem Einsetzen die Unterseite des Pilzkopfs an einer die erste Öffnung begrenzenden Wand anliegt. Durch die Anlage an der die Öffnung begrenzenden bzw. umgebenden Wand oder Wände, die auch als Anlageabschnitt für den Lagerzapfen bezeichnet werden kann/können, ist der Lagerzapfen gegen ein Herausbewegen gesichert. Im Zusammenspiel mit der mindestens einen Schulter des Koppelzapfens ergibt sich nach dem Einrasten des Pilzkopfs ein Verspannen der zweiten Lagerkomponente relativ zur ersten Lagerkomponente. Stützt sich die zweite Lagerkomponente zusätzlich an der Wand ab, ergibt sich auch ein Verspannen gegenüber der Wand.

Die zweite Lagerkomponente kann im Bereich der ersten Öffnung radial und/oder der Lagerzapfen radial federnd ausgebildet sein. Dadurch wird das Einsetzen des Pilzkopfs oder eines Lagerzapfens mit einem Rastelement erleichtert. Beim Einsetzen kann dabei die erste Öffnung kurzfristig vergrößert sein. Hierzu kann die zweite Lagerkomponente im Bereich der ersten Öffnung mindestens einen Einschnitt aufweisen, der eine Vergrößerung der ersten Öffnung ermöglicht. Bspw. kann ein solcher Anlageabschnitt die erste Öffnung im Wesentlichen C-förmig umgeben. Dabei kann die zweite Lagerkomponente im Bereich der ersten Öffnung auch C-förmig die erste Öffnung umgeben. Weiter kann der Lagerzapfen einen Spalt entlang der Längsachse aufweisen, so dass der Lagerzapfen zumindest im oberen Abschnitt, in welchem sich ein Pilzkopf zur Verrastung befindet, zusammengedrückt und damit der Durchmesser verkleinert werden kann. Hierüber wird das Einsetzen des Lagerzapfens in die erste Öffnung erleichtert.

Die erste Lagerkomponente und/oder die erste Öffnung der zweiten Lagerkomponente können auch Schrägen aufweisen, die das Einsetzen des Rastelements erleichtern. Über die Schrägen kann ein entsprechendes Rastelement, bspw. ein Pilzkopf, leicht eingesetzt werden.

Die erste Lagerkomponente kann ein zur Wand gerichtetes zweites Anlageelement aufweisen. Über das zweite Anlageelement stützt sich die erste Lagerkomponente an der Seite der Wand ab, welche der Seite der Wand gegenüberliegt, an der sich die zweite Lagerkomponente abstützen kann.

Dabei können sich das zweite Anlageelement und der Koppelzapfen in Bezug auf die Drehachse gegenüberliegen, so dass ein Verkippen vermieden oder zumindest erschwert wird.

Die Lagerung der ersten Lagerkomponente an der Wand wird dadurch verbessert.

Die zweite Lagerkomponente kann mindestens zwei Anlageabschnitte für das Rastelement aufweisen, die in axialer Richtung der ersten Öffnung relativ zueinander verlagerbar sind. Zum einen wird hierdurch das Einsetzen eines Rastelementes des Lagerzapfens in die erste Öffnung verbessert. Zum anderen wird damit erreicht, dass sich mindestens einer der Abschnitte relativ zum anderen Abschnitt, beispielsweise parallel zur Wand, verlagern lässt, was ein Verspannen zur spielfreien Verbindung zwischen erster Lagerkomponente und zweiter Lagerkomponente bewirkt. Im Weiteren lässt sich damit ein Verspannen gegenüber der Wand erreichen, wenn sich die zweite Lagerkomponente über einen entsprechenden Anlageabschnitt direkt an der Wand abstützt. Die vorstehend genannte Aufgabe wird auch durch einen Luftausströmer mit den Merkmalen des Anspruchs 10 gelöst.

Der Luftausströmer kann mehrere Luftleitelemente aufweisen, die jeweils über einen Hebel an der Gehäusewand gelagert sind. Die Luftleitelemente befinden sich auf der Innenseite des Gehäuses des Luftausströmers im Luftkanal. Die Hebel sind von außen auf die Koppelzapfen und den Lagerzapfen aufgesetzt und ermöglichen eine spielfreie Lagerung bei einer entkoppelten Drehmomentübertragung über den Koppelzapfen. Es ist dabei ausreichend die Luftleitelemente auf einer Seite über die hierin beschriebene Lageranordnung mit einer zweiten Lagerkomponente bzw. dem Hebel zu lagern. Die gegenüberliegende Seite der ersten Lagerkomponente bzw. des Luftleitelementes kann einen weiteren Lagerzapfen aufweisen, der in einer einfachen Öffnung aufgenommen ist. Diese Lagerung wirkt sich jedoch nicht auf die Drehmomentübertragung und die spielfreie Lagerung aus.

Der Luftausströmer sowie die Komponenten des Luftausströmers und der Lageranordnung können im Wesentlichen aus Kunststoff bestehen und in einem Spritzgussprozess in hoher Stückzahl kostengünstig und schnell gefertigt werden.

Einzelne Komponenten des Luftausströmers oder der Lageranordnung können auch beleuchtbare Elemente aufweisen oder vollständig beleuchtbar sein, sodass eine Illuminierung des Luftausströmers oder Komponenten hiervon erreicht werden kann. Beispielsweise kann eine Einkopplung von Licht über den Lagerzapfen und/oder über den Koppelzapfen erfolgen.

Weitere Vorteile und Ausgestaltungsmöglichkeiten der Erfindung ergeben sich aus der nachfolgenden Figurenbeschreibung von nicht einschränkend zu verstehenden Ausführungsbeispielen. Kurzbeschreibung der Zeichnungen

In den Zeichnungen zeigt:
- Fig. 1: eine perspektivische Darstellung einer Lageranordnung in einer exemplarischen Ausführungsform;
- Fig. 2: eine perspektivische Darstellung der Lamelle der Lageranordnung von Fig. 1;
- Fig. 3: eine schematische Darstellung eines Teils der Wand der Lageranordnung von Fig. 1;
- Fig. 4: eine Draufsicht auf die Lageranordnung von Fig. 1;
- Fig. 5: eine Schnittansicht durch die Lageranordnung von Fig. 4 entlang der Ebene A-A;
- Fig. 6: eine Schnittansicht durch die Lageranordnung von Fig. 4 entlang der Ebene B-B;
- Fig. 7: eine Schnittansicht durch die Lageranordnung von Fig. 4 entlang der Ebene C-C;
- Fig. 8: eine Draufsicht auf den Hebel der Lageranordnung von Fig. 1; und
- Fig. 9: eine Schnittansicht durch den Hebel von Fig. 8 entlang der Ebene D-D.

In den Zeichnungen mit gleichen Bezugszeichen versehene Elemente entsprechen im Wesentlichen einander, sofern nichts anderes angegeben ist. Darüber hinaus wird darauf verzichtet,

Bestandteile zu zeigen und zu beschreiben, welche nicht wesentlich zum Verständnis der hierin offenbarten technischen Lehre sind. Im Weiteren werden nicht für alle bereits eingeführten und dargestellten Elemente die Bezugszeichen wiederholt, sofern die Elemente selbst und deren Funktion bereits beschrieben wurden oder für einen Fachmann bekannt sind.

### Ausführliche Beschreibung von Ausführungsbeispielen

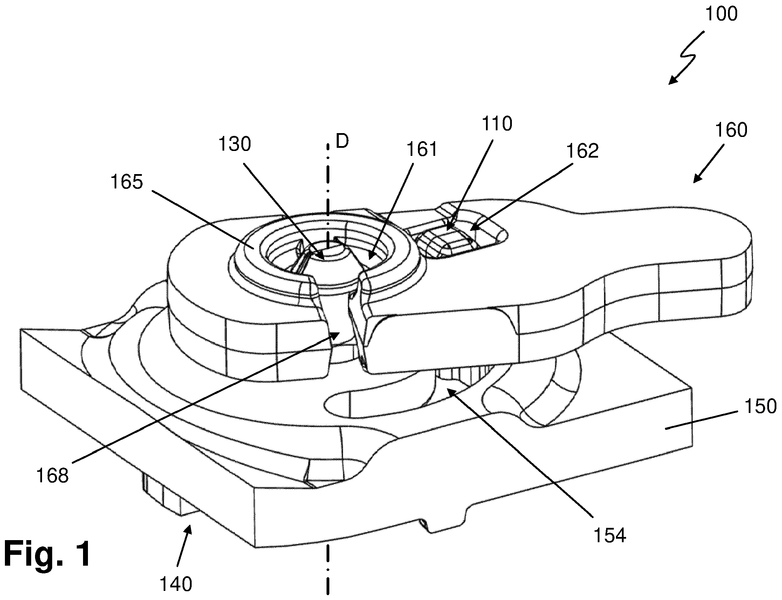

Fig. 1 zeigt eine perspektivische Darstellung einer Lageranordnung 100 in einer exemplarischen Ausführungsform. Die Lageranordnung 100 dient zur spielfreien und entkoppelten Drehmomentübertragung für eine Lamelle 140 eines Luftausströmers (in den Figuren nicht darstellt). Der Luftausströmer weist ein Gehäuse mit gegenüberliegenden Seitenwänden auf, wobei über eine Wand 150 Lamellen 140 gelagert sind und eine von der spielfreien Lagerung entkoppelte Drehmomentübertragung vorgesehen ist.

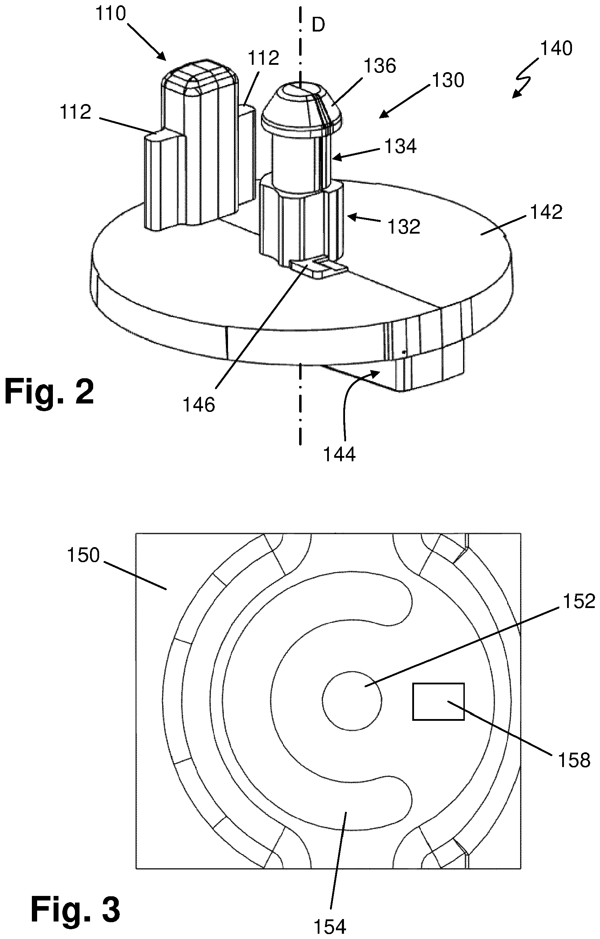

Der Luftausströmer weist mehrere Lamellen 140 auf, wobei in den Figuren nur eine Lamelle 140 und jeweils nur eine Lageranordnung 100 gezeigt sind. Die anderen Lamellen können über eine gleiche Lageranordnung 100 an benachbarten Bereichen der dargestellten Wand 150 gelagert sein. In den Figuren ist die Lamelle 140 nur schematisch angedeutet. Hierzu ist eine Luftleitfläche 144 nur angedeutet (siehe Fig. 2) und nicht über die gesamte Erstreckung in einem Luftkanal des Luftausströmers gezeigt.

Die Lageranordnung 100 weist zusätzlich zur Lamelle 140, die als erste Lagerkomponente dient, eine zweite Lagekomponente in Form eines Hebels 160 auf. Der Hebel 160 kann über einen in den Figuren nicht dargestellten Mitnehmerzapfen mit einem Mitnehmer verbunden sein, der mit mehreren Lamellen 140 in entsprechender Weise über Mitnehmerzapfen an Hebeln 160 verbunden ist, und über welchen ein synchrones Rotieren von parallel drehbar gelagerten Lamellen 140 erreicht werden kann. Der Hebel 160 weist hierzu an seinem abgelegenen, der Drehachse D abgewandten Ende einen nicht dargestellten Mitnehmerzapfen auf. Die Übertragung einer Drehbewegung über den exzentrisch zur Drehachse D der Lamelle 140 gelagerten Mitnehmerzapfen ermöglicht das Aufbringen eines großen Drucks auf die Lamelle 140, beispielsweise um ein abdichtendes Verschließen von parallelen drehbar gelagerten Lamellen 140 zu erreichen. Es ist ersichtlich, dass über einen Hebel 160 das Moment auf eine Lamelle 140 in Abhängigkeit der Position des Mitnehmerzapfens oder eines anderen entsprechenden Elements eingestellt werden kann.

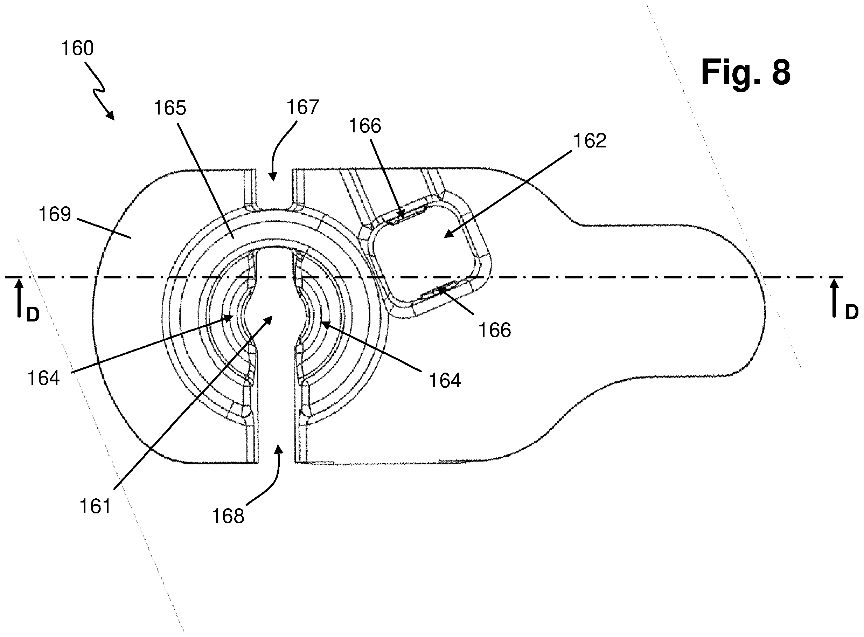

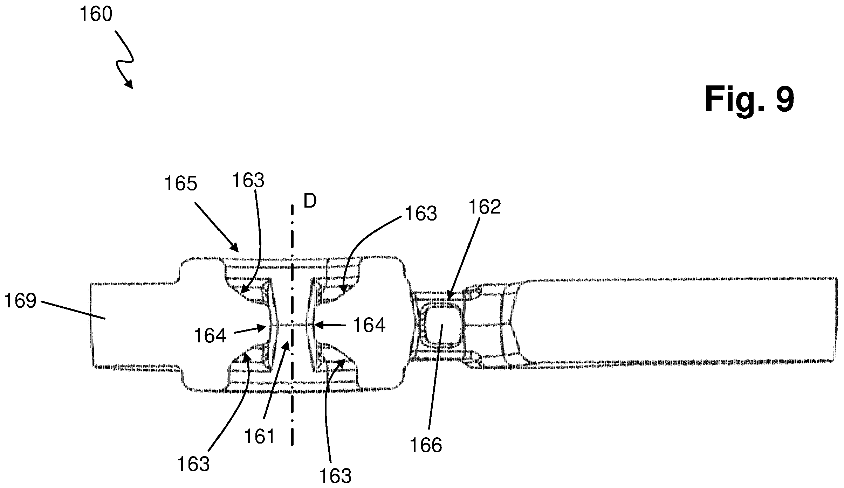

Die Ausgestaltung des Hebels 160 ist in den Fig. 8 und 9 genauer gezeigt.

Das Gehäuse des Luftausströmers, die Lamellen 140 und die Hebel 160 bestehen aus Kunststoff und sind in einem Spritzgussprozess hergestellt. Die Ausbildung der Lageranordnung 100 ermöglicht es die Komponenten in breiten Toleranzfeldern zu fertigen, wodurch der Ausschuss minimiert bzw. reduziert ist. Die Komponenten können in weiteren Ausführungsformen auch durch andere Verfahren hergestellt werden.

Die spielfreie Lagerung und die entkoppelte Drehmomentübertragung erfolgen durch die spezielle Ausgestaltung der Lamelle 140 mit einem Lagerzapfen 130 und einem Koppelzapfen 110 sowie des Hebels 160. Im Weiteren beeinflusst auch die Ausbildung der Wand 150 die Lagerung und die Drehmomentübertragung.

Der Hebel 160 ermöglicht die einfache Ausgestaltung des Lagerzapfens 130 der Lamelle 140, da die Rotation der Lamelle 140 nicht über den Lagerzapfen 130 auf die Lamelle 140 eingebracht wird, sondern über den exzentrisch zur Drehachse D gelagerten Koppelzapfen 110. Damit die Übertragung bspw. einer linearen oder transversalen Bewegung eines Mitnehmers zum Rotieren der Lamelle 140 auf den Hebel 160 erfolgen kann, ist eine entsprechende Ausbildung des Hebels 160 erforderlich. Dabei ist darauf zu achten, dass der Hebel 160 nicht frei beweglich mit der Lamelle 140 verbunden ist, um ein Spiel in der Verbindung zwischen Hebel 160 und Lamelle 140 und damit auch ein Klappern auszuschließen. Dies kann entweder dadurch erreicht werden, dass sehr enge Toleranzen eingehalten werden, oder dass eine Ausgestaltung wie nachfolgend beschrieben zum Einsatz kommt. Enge Toleranzvorgaben haben den Nachteil, dass die Herstellung mit hohem Aufwand und damit mit hohen Kosten verbunden ist. Zudem hat dies einen hohen Ausschuss zur Folge.

Die hierin beschriebene Lageranordnung 100 bietet die Möglichkeit ein Drehmoment auf die Lamelle 140 zu übertragen, ohne dass der Lagerzapfen 130 einen verhältnismäßig großen Durchmesser aufweist und ohne dass enge Toleranzen gefertigt werden müssen.

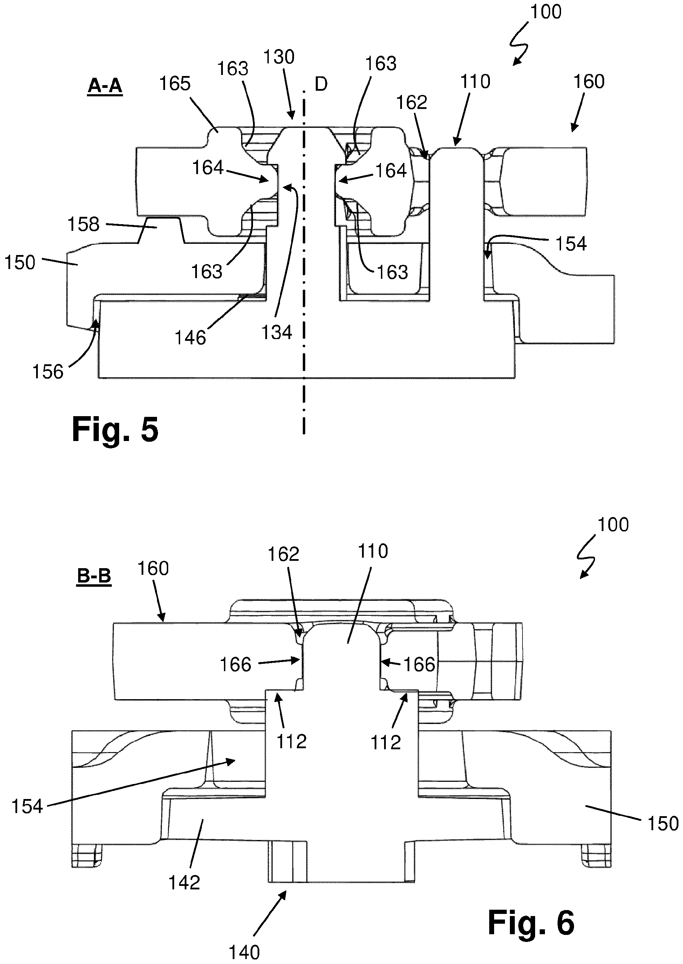

Die Lamelle 140 der Lageranordnung 100 ist in perspektivischer Darstellung in Fig. 1 gezeigt und weist eine Luftleitfläche 144 auf. Die Luftleitfläche 144 ist in Fig. 2 nur angedeutet. Die Luftleitfläche 144 erstreckt sich ausgehend von einem Lagerteller 142 in Fig. 2 nach unten und bildet die Fläche im Luftausströmer, über welche eine Luftablenkung im Luftkanal des Luftausströmers erfolgen kann. Der Lagerteller 142 ist in einer Aufnahme 156 (siehe beispielsweise Fig. 5) der Wand 150 aufgenommen.

Der Lagerteller 142 kann mit Spiel in der Aufnahme 156 drehbar gelagert sein, sodass es zu keiner Blockade bei der Rotation der Lamelle 140 kommt und größere Toleranzbereiche für den Lagerteller 142 gewählt werden können. Der Lagerteller 142 und/oder die Umfangswand der Aufnahme 156 können umfangseitig Dämpfungs- oder Dichtungselemente aufweisen, beispielsweise durch eine spezielle Beschichtung (zum Beispiel aus thermoplastischen Elastomeren (TPE) oder Silikon) angebracht sein. Über die Dämpfungs- und/oder Dichtelemente wird eine Abdichtung des Luftkanals gegenüber der äußeren Umgebung bereitgestellt, so dass keine Luft aus dem Luftkanal des Luftausströmers abseits einer Luftaustrittsöffnung austritt.

Die Ausbildung von Dämpfungs- und/oder Dichtelementen kann durch einen 2-Komponenten-Spritzguss erfolgen. Es werden dabei aus einem ersten Kunststoff der Lagerteller 142 sowie weitere Bestandteile der Lamelle 140 und aus einem zweiten Kunststoff die Dämpfungs- und/oder Dichtelemente sowie ein erstes Anlageelement 158 (siehe. Fig. 3 und 5) gefertigt. Der zweite Kunststoff kann bspw. die vorstehend genannten Materialien umfassen.

Die Aufnahme der Lamelle 140 über den Lagerteller 142 an der Innenseite der Wand 150 in der Aufnahme 156 verhindert das Auftreten von Verwirbelungen und dadurch von störenden Geräuschen im Luftkanal des Luftausströmers, da die Luft stets an einer im Wesentlichen planen Fläche entlang der Innenseite der Wand 150 strömt. Es ragen keine störenden Elemente in den Luftkanal hinein. Die Aufnahme 156 wird durch den Lagerteller 142 im Wesentlichen verschlossen. Hierzu weist der Lagerteller 142 eine Höhe auf, die im Wesentlichen der Höhe der Aufnahme 156 entspricht, damit die Unterseite des Lagertellers 142, die dem Luftkanal zugewandt ist, im Wesentlichen plan mit der Innenseite der Wand 150 abschließt.

Von dem Lagerteller 142 erstrecken sich auf der gegenüberliegenden Seite zur Luftleitfläche 144 der Koppelzapfen 110 und der Lagerzapfen 130. Der Lagerzapfen 130 erstreckt sich mittig vom Lagerteller 142 und verläuft durch die Drehachse D. Die Lamelle 140 ist um die Drehachse D über den Lagerzapfen 130 im Gehäuse des Luftausströmers in der Lageröffnung 152 der Wand 150 drehbar gelagert.

Der Lagerzapfen 130 weist einen Lagerabschnitt 132 auf. Der Lagerabschnitt 132 ist in der Lageröffnung 152 aufgenommen. Die Umfangswand des Lagerabschnitts 132 liegt der Umfangswand der Lageröffnung 152 gegenüber bzw. an dieser an. Ausgehend vom Lagerteller 142 erstreckt sich über dem Lagerabschnitt 132 ein Rastabschnitt 134 und anschließend ein Pilzkopf 136. Der Rastabschnitt 134 weist gegenüber dem Lagerabschnitt 132 und dem Pilzkopf 136 einen geringeren Durchmesser auf. Damit kann durch das Einbringen des Rastabschnitts 134 in eine erste Öffnung 161 des Hebels 160 mit einem korrespondieren Durchmesser oder Querschnitt ein Verrasten erreicht werden (siehe bspw. Fig. 5). Der Pilzkopf 136 weist ausgehend vom Lagerteller 142 an seinem oberen Ende einen nach unten zunehmenden Durchmesser auf. An der Unterseite weist der Pilzkopf 136 einen im Wesentlichen planen Ring auf, der sich in einer Ebene orthogonal zur Drehachse D erstreckt. Nach dem Einsetzen des Lagerzapfens 130 in die erste Öffnung 161 liegt die Unterseite des Pilzkopfs 136 auf einem Rand der ersten Öffnung 161 auf und verhindert ein Herausbewegen des Lagerzapfens 130 aus der ersten Öffnung 161. Im verrasteten Zustand liegen erste Anlageabschnitte 164 des Hebels 160 an der Umfangswand des Rastabschnitts 134 an und sind zwischen der Unterseite des Pilzkopfs 136 und dem Lagerabschnitt 132 aufgenommen.

Der Koppelzapfen 110 ist exzentrisch zur Drehachse D am Lagerteller 142 angeordnet. Der Koppelzapfen 110 weist zwei seitlich abstehende Elemente auf, die an ihrer Oberseite eine Schulter 112 ausbilden. Die Schultern 112 dienen zum Abstützen des Hebels 160 in Richtung der Drehachse D.

Auf dem Lagerteller 142 befindet sich ein zweites Anlageelement 146, das als Erhebung von der Oberfläche des Lagertellers 142 absteht. Das zweite Anlageelement 146 befindet sich in unmittelbarer Nähe zum Lagerzapfen 130 und liegt in Bezug auf die Drehachse D dem Koppelzapfen 110 gegenüber. Das zweite Anlageelement 146 dient zum Abstützen der Lamelle 140 an der Innenseite der Wand 150 in der Aufnahme 156. Das zweite Anlageelement 146 reduziert somit die Anlage- bzw. Kontaktfläche der Lamelle 140 in der Aufnahme 156. Es kann somit die Reibung durch die Lagerung der Lamelle 140 reduziert werden. Zudem kann über das zweite Anlageelement 146 zusätzlich ein Spielausgleich für die Lageranordnung 100 bereitgestellt werden, wobei sich ein Hebel 160 zusätzlich an der Außenseite der Wand 150 abstützen kann, wie nachfolgend näher beschrieben.

Fig. 3 zeigt eine schematische Darstellung eines Teils der Wand 150 der Lageranordnung 100 mit Blick auf die Wand 150 von außerhalb des Luftkanals. Die Wand 150 weist die Lageröffnung 152 auf, die zur Aufnahme des Lagerabschnitts 132 des Lagerzapfens 130 vorgesehen ist. Der Durchmesser der Lageröffnung 152 ist so gewählt, dass der Lagerzapfen 130 bzw. der Lagerabschnitt 132 mit Spiel in der Lageröffnung 152 aufgenommen ist. Die Drehachse D verläuft mittig durch die Lageröffnung 152. Um die Lageröffnung 152 herum erstreckt sich eine Führungskulisse 154. In der Führungskulisse 154 ist im eingesetzten Zustand der Lamelle 140 der Koppelzapfen 110 aufgenommen. Der Koppelzapfen 110 kann innerhalb der Führungskulisse 154 verlagert werden, bis dieser an Enden der Führungskulisse 154 anliegt. Die Ausbildung der Führungskulisse 154 legt damit auch den maximalen Betrag fest, um welchen die Lamelle 140 rotiert werden kann. Der Koppelzapfen 110 ist mit Spiel in der Führungskulisse 154 aufgenommen. Exzentrisch zur Lageröffnung 152 erstreckt sich von der Oberfläche der Wand 150 das erste Anlageelement 158. Das erste Anlageelement 158 besteht aus einem gegenüber dem Kunststoff der Wand 150 weicheren Kunststoff. Bspw. besteht das erste Anlageelement 158 aus TPE. Das erste Anlageelement 158 steht von der Oberfläche der Wand 150 ab und ragt in Richtung des Hebels 160 (siehe Fig. 5). Das erste Anlageelement 158 kann aufgrund seiner weicheren Ausführung in einem bestimmbaren Bereich zusammengedrückt werden. Damit ist das erste Anlageelement 158 gefedert ausgeführt und unterstützt die spielfreie Lagerung der Lamelle 140 an der Wand 150 über den Hebel 160.

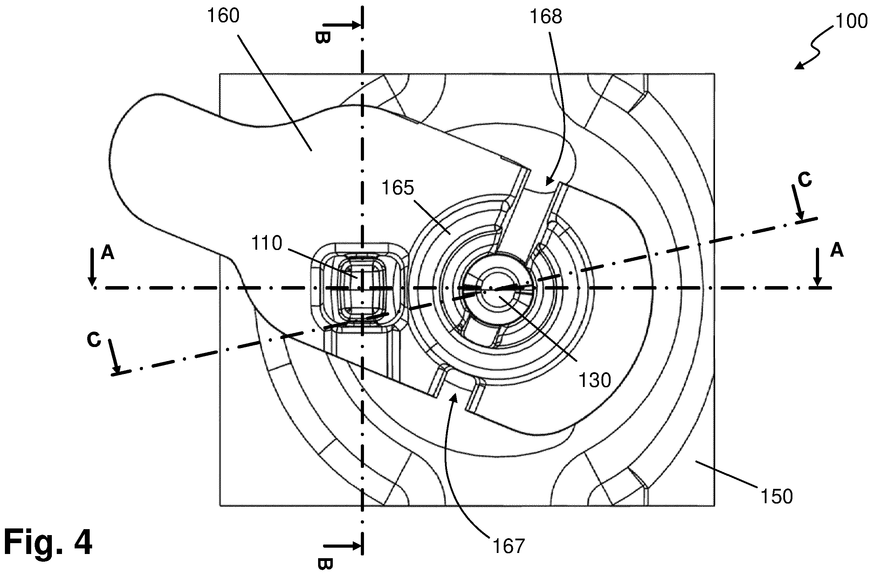

Fig. 4 zeigt eine Draufsicht auf die Lageranordnung 100 von Fig. 1. In dieser Darstellung ist die exzentrische Lagerung des Koppelzapfens 110 in Bezug auf die Drehachse D und den Lagerzapfen 130 sowie die exzentrische Position eines möglichen Ankopplungspunktes für einen Mitnehmerzapfen gezeigt.

Fig. 4 zeigt Einschnitte 167 und 168, die den Hebel 160 im Bereich der ersten Öffnung 161 teilen. Wie in Fig. 8 näher dargestellt, ist der Hebel 160 im Bereich der ersten Öffnung 161 über die Einschnitte 167, 168 geteilt und die gegenüberliegenden ersten Anlageabschnitte 164 sind nur über den Ring 165 miteinander verbunden. Der Ring 165 ist nicht geschlossen ausgeführt, sodass die Weite der ersten Öffnung 161 durch ein Aufspreizen (beispielsweise beim Einbringen des Pilzkopfs 136) verändert werden kann. Die beiden gegenüberliegenden ersten Anlageabschnitte 164 können daher relativ zueinander sowohl in radialer als auch in axialer Richtung in Bezug auf die erste Öffnung 161 verlagert werden.

Fig. 5 zeigt eine Schnittansicht durch die Lageranordnung 100 von Fig. 4 entlang der Ebene A-A. Es ist der verrastete Zustand gezeigt, wobei der Koppelzapfen 130 so in der ersten Öffnung 161 aufgenommen ist, dass die gegenüberliegenden ersten Anlageabschnitte 164 am Lagerabschnitt 132 anliegen und eine Verlagerung des Koppelzapfens 130 aus der ersten Öffnung 161 über den Pilzkopf 136 verhindert wird. Im Bereich der ersten Öffnung 161 weisen die gegenüberliegenden Anlageabschnitte 164 Schrägen 163 auf, die ein Einsetzen des Pilzkopfs 136 erleichtern.

Die Lamelle 140 liegt mit dem Lagerteller 142 über das zweite Anlageelement 146 an der Innenseite der Aufnahme 156 der Wand 150 an. Außerhalb des Luftkanals ist der Hebel 160 über den Koppelzapfen 110 und den Lagerzapfen 130 mit dem Rastmittel in Form des Pilzkopfs 136 mit der Lamelle 140 spielfrei verbunden. Hierzu stützen sich die gegenüberliegenden ersten Anlageabschnitte 164 an der Unterseite des Pilzkopf 136 ab. Abseits der Lagerung über den Lagerzapfen 130 stützt sich der Hebel 160 an den Schultern 112 ab, wie in der Schnittansicht durch die Ebene B-B in Fig. 6 gezeigt. Auf der anderen Seite stützt sich der Hebel 160 an dem ersten Anlageelement 158 ab. Das erste Anlageelement 158 kann dabei gestaucht werden. Die Verbindung zwischen Hebel 160 und Lamelle 140 ist damit spielfrei sichergestellt.

Für die spielfreie Lagerung an der Wand 150 steht der Hebel 160 an der Außenseite der Wand 150 über das erste Anlageelement 158 in Kontakt mit der Wand 150. In weiteren nicht dargestellten Ausführungen kann die beispielsweise anstelle des ersten Anlageelements 158 über einen Bereich des Rings 165 erfolgen. Vorzugsweise kann das Abstützen des Hebels 160 in einem Bereich erfolgen, welcher dem Anlageelement 146 in Bezug auf die Drehachse D gegenüberliegt, sodass ein Verkippen verhindert wird und die spielfreie Lagerung sichergestellt ist.

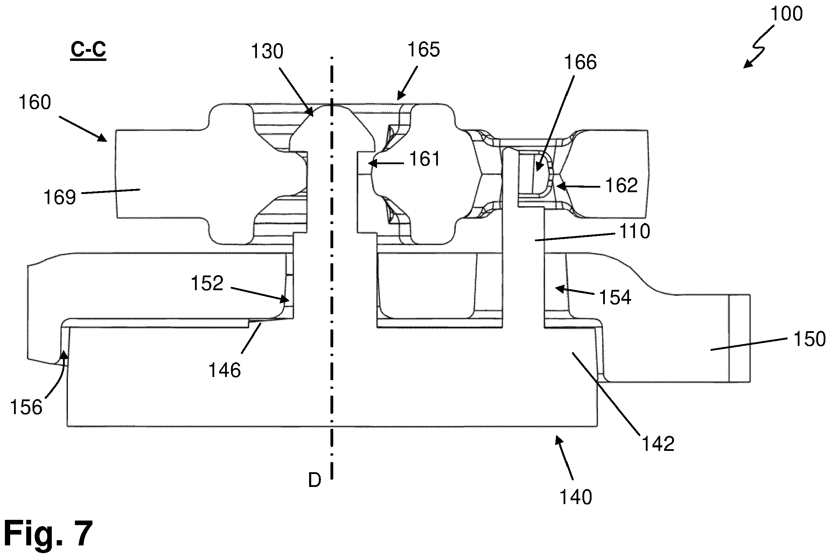

Fig. 7 zeigt eine Schnittansicht durch die Lageranordnung 100 von Fig. 4 entlang der Ebene C-C und verdeutlicht das Verspannen des Hebels 160 über das Abstützen an den Schultern 112 und an der Unterseite des Pilzkopfs 136 in entgegengesetzten Richtungen. Hierzu ist auch das Abstützen an dem ersten Anlageelement 158 erforderlich, welches in der Schnittansicht von Fig. 7 außerhalb der Schnittebene liegt und daher nicht gezeigt ist. Die Höhe bzw. Position der für das Verspannen erforderlichen Abschnitte - Schultern 112, Unterseite Pilzkopf 136, erstes Anlageelement 158 - beeinflussen wie sehr der Hebel 160 verspannt wird. Darüber hinaus kann über den Abstand des Koppelzapfens 110 zum Lagerzapfen 130 das Verspannen des Hebels 160 beeinflusst werden. Auf den Schultern 112 liegen Bereiche des Hebels 160 auf, welche die zweite Öffnung umgeben. Das Abstützen des Hebels 160 auf den Schultern 112 erfolgt in der gezeigten Ausführungsform nicht über die zweiten Anlageabschnitte 166 selbst.

In der zweiten Öffnung 162 sind zwei gegenüberliegende zweite Anlageabschnitte 166 vorgesehen. Die zweiten Anlageabschnitte 166 nehmen das obere Ende des Koppelzapfens 110 zwischen sich auf. Die zweiten Anlageabschnitte 166 weisen zu dem Koppelzapfen 110 eine Übergangspassung auf. Der Koppelzapfen 110 weist damit kein Spiel in der zweiten Öffnung 162 auf.

Fig. 8 zeigt eine Draufsicht auf den Hebel 160 der Lageranordnung 100 von Fig. 1. Über die Einschnitte 167, 168 ist der Hebel 160 im Bereich der ersten Öffnung 161 mit den gegenüberliegenden Anlageabschnitten 164 geteilt und lediglich über den Ring 165 verbunden. Der abseits der zweiten Öffnung 162 gelegene Abschnitt des Hebels 160 bildet einen gefederten Abschnitt 169 des Hebels 160. Der gefederte Abschnitt 169 ist relativ zum gegenüberliegenden Abschnitt des Hebels 160 sowohl in axialer Richtung als auch in radialer Richtung in Bezug auf die erste Öffnung 161 ausgebildet. Hierzu ist der Ring 165 im Verbindungsbereich zwischen den Abschnitten ausreichend flexibel ausgebildet.

Die beiden ersten Anlageabschnitte 164 sind bogenförmig ausgeführt und umgeben die erste Öffnung 161 beabstandet zueinander. Die beiden ersten Anlageabschnitte 164 sind Bestandteil des C-förmigen Rings 165, der die erste Öffnung 161 umgibt und die gefederte Ausbildung des Hebels 160 bereitstellt.

Fig. 9 zeigt eine Schnittansicht durch den Hebel 160 von Fig. 8 entlang der Ebene D-D. In der Schnittansicht ist gezeigt, dass sich die zweiten Anlageabschnitte 166 nur innerhalb der zweiten Öffnung 162 befinden und damit nicht als Anlage für die Schultern 112 dienen können. In weiteren nicht dargestellten Ausführungsformen kann ein Koppelzapfen 110 auch so in einer zweiten Öffnung 162 aufgenommen sein, dass Anlageabschnitte 166 zugleich auch als Auflage für die Schultern 112 dienen.

Die vorgestellte Lagereinrichtung 100 ermöglicht die Übertragung eines Drehmoments auf einen Lagerzapfen 130 und eine Lamelle 140, ohne dass enge Toleranzen eingehalten werden müssen, und/oder ohne, dass der Lagerzapfen 130 mit großen Durchmessern, Tellern etc. versehen werden muss. Die Verbindung zwischen einer Lamelle 140 und einem Hebel 160 wird über die Lageanordnung 100 spielfrei bereitgestellt. Ferner kann auch ein Spielausgleich in der Lagerung zur Wand 150 bereitgestellt werden, wobei sich die vorgespannte Anordnung zwischen Lamelle 140 und Hebel 160 zusätzlich an beiden Seiten der Wand 150 abstützt.

### Bezugszeichenliste

- 100: Lageranordnung
- 110: Koppelzapfen
- 112: Schulter
- 130: Lagerzapfen
- 132: Lagerabschnitt
- 134: Rastabschnitt
- 136: Pilzkopf
- 140: Lamelle
- 142: Lagerteller
- 144: Luftleitfläche
- 146: Anlageelement
- 150: Wand
- 152: Lageröffnung
- 154: Führungskulisse
- 156: Aufnahme
- 158: Anlageelement
- 160: Hebel
- 161: erste Öffnung
- 162: zweite Öffnung
- 163: Schräge
- 164: Anlageabschnitt
- 165: Ring
- 166: Anlageabschnitt
- 167: Einschnitt
- 168: Einschnitt
- 169: gefederter Abschnitt
- D: Drehachse

## Patentansprüche

1. Lageranordnung (100) mit einer ersten Lagerkomponente (140), aufweisend einen Lagerzapfen (130) und einen Koppelzapfen (110), und einer zweiten Lagerkomponente (160), die an einer Wand (150) um eine gemeinsame Drehachse (D) drehbar gelagert sind, wobei
- der Lagerzapfen (130) sich längs der Drehachse (D) und der Koppelzapfen (110) exzentrisch zur Drehachse (D) erstrecken,
- der Lagerzapfen (130) in einer Lageröffnung (152) der Wand (150) aufgenommen ist,
- der Koppelzapfen (110) in einer Führungskulisse (154) der Wand (150) aufgenommen ist und aus der Führungskulisse (154) herausragt,
- die zweite Lagerkomponente (160) eine erste Öffnung (161), in welcher der Lagerzapfen (130) aufgenommen ist, und eine exzentrisch zur ersten Öffnung (161) angeordnete zweite Öffnung (162) aufweist, in welcher der Koppelzapfen (110) aufgenommen ist,
- der Lagerzapfen (130) über ein Rastmittel mit der zweiten Lagerkomponente (160) verbunden ist, und
- sich die zweite Lagerkomponente (160) an dem Koppelzapfen (110) abstützt.

2. Lageranordnung (100) nach Anspruch 1, wobei sich die zweite Lagerkomponente (160) gefedert an dem Koppelzapfen (110) abstützt.

3. Lageranordnung (100) nach Anspruch 1 oder 2, wobei sich die erste Lagerkomponente (140) und die zweite Lagerkomponente (160) auf gegenüberliegenden Seiten an der Wand (150) abstützen.

4. Lageranordnung (100) nach einem der Ansprüche 1 bis 3, wobei der Koppelzapfen (110) mindestens eine Schulter (112) aufweist, an der sich die zweite Lagerkomponente (160) abstützt.

5. Lageranordnung (100) nach einem der Ansprüche 1 bis 4, wobei der Lagerzapfen (130) ein Rastelement aufweist, das gegenüber einem entlang der Drehachse (D) sich anschließenden Lagerabschnitt (132) einen größeren Durchmesser aufweist, der größer ist als der Durchmesser der ersten Öffnung (161) der zweiten Lagerkomponente (160), und wobei das Rastelement die erste Öffnung (161) der zweiten Lagerkomponente (160) hintergreift.

6. Lageranordnung (100) nach einem der Ansprüche 1 bis 5, wobei die zweite Lagerkomponente (160) im Bereich der ersten Öffnung (161) radial federnd und/oder der Lagerzapfen (130) radial federnd ausgebildet sind.

7. Lageranordnung (100) nach Anspruch 5, wobei die erste Lagerkomponente (140) und/oder die erste Öffnung (161) der zweiten Lagerkomponente (160) Schrägen (163) aufweisen, die das Einsetzen des Rastelements erleichtern.

8. Lageranordnung (100) nach einem der Ansprüche 1 bis 7, wobei die erste Lagerkomponente (140) ein zur Wand (150) gerichtetes Anlageelement (146) aufweist.

9. Lageranordnung (100) nach Anspruch 5 , wobei die zweite Lagerkomponente (160) mindestens zwei Anlageabschnitte (164) für das Rastelement aufweist, die in axialer Richtung der ersten Öffnung (161) relativ zueinander verlagerbar sind.

10. Luftausströmer mit einem Gehäuse und mindestens einer Lageranordnung (100) nach Anspruch 8, wobei die erste Lagerkomponente (140) als Luftleitelement ausgebildet ist und der Lagerzapfen (130) und der Koppelzapfen (110) in einer Lageröffnung (152) und einer Führungskulisse (154) einer Gehäusewand des Luftausströmers aufgenommen sind, und wobei die zweite Lagerkomponente (160) als Hebel ausgebildet und das Luftleitelement über den Lagerzapfen (130), den Koppelzapfen (110), das Anlageelement (146), ein Anlageelement (158) an der Wand (150) und das Rastmittel spielfrei an der Gehäusewand gelagert ist.

## Claims

1. Bearing arrangement (100) with a first bearing component (140), comprising a bearing pin (130) and a coupling pin (110), and a second bearing component (160), the bearing components being mounted on a wall (150) to be rotatable about a common axis (D) of rotation, wherein
- the bearing pin (130) extends along the axis (D) of rotation and the coupling pin (110) extends eccentrically with respect to the axis (D) of rotation,
- the bearing pin (130) is received in a bearing opening (152) of the wall (150),
- the coupling pin (110) is received in a guide slot (154) of the wall (150) and projects out of the guide slot (154),
- the second bearing component (160) has a first opening (161), in which the bearing pin (130) is received, and a second opening (162), which is arranged eccentrically with respect to the first opening (161) and in which the coupling pin (110) is received,
- the bearing pin (130) is connected with the second bearing component (160) by way of detent means and
- the second bearing component (160) is supported on the coupling pin (110).

2. Bearing arrangement (100) according to claim 1, wherein the second bearing component (160) is resiliently supported on the coupling pin (110).

3. Bearing arrangement (100) according to claim 1 or 2, wherein the first bearing component (140) and the second bearing component (160) are supported on the wall (150) at opposite sides.

4. Bearing arrangement (100) according to any one of claims 1 to 3, wherein the coupling pin (110) has at least one shoulder (112) on which the second bearing component (160) is supported.

5. Bearing arrangement (100) according to any one of claims 1 to 4, wherein the bearing pin (130) comprises a detent element which by comparison with a bearing section (132) adjoining along the axis (D) of rotation has a larger diameter which is greater than the diameter of the first opening (161) of the second bearing component (160) and wherein the detent element engages behind the first opening (161) of the second bearing component (160).

6. Bearing arrangement (100) according to any one of claims 1 to 5, wherein the second bearing component (160) is constructed to be radially resilient in the region of the first opening (161) and/or the bearing pin (130) is constructed to be radially resilient.

7. Bearing arrangement (100) according to claim 5, wherein the first bearing component (140) and/or the first opening (161) of the second bearing component (160) has or have chamfers (163) facilitating insertion of the detent element.

8. Bearing arrangement (100) according to any one of claims 1 to 7, wherein the first bearing component (140) has a support element (146) directed towards the wall (150).

9. Bearing arrangement (100) according to claim 5, wherein the second bearing component (160) has at least two support sections (164), which are displaceable relative to one another in the axial direction of the first opening (161), for the detent element.

10. Air vent with a housing and at least one bearing arrangement (100) according to claim 8, wherein the first bearing component (140) is constructed as an air guide element and the bearing pin (130) and the coupling pin (110) are received in a bearing opening (152) and a guide slot (154) of a housing wall of the air vent and wherein the second bearing component (160) is constructed as a lever and the air guide element is mounted free of play on the housing wall by way of the bearing pin (130), the coupling pin (110), the support element (146), a support element (158) at the wall (150) and the detent means.

## Revendications

1. Ensemble de paliers (100) avec un premier composant de palier (140), présentant un tourillon de palier (130) et un tourillon de couplage (110), et un deuxième composant de palier (160), qui sont montés sur une paroi (150) de manière à pouvoir tourner autour d'un axe de rotation (D) commun, où
- le tourillon (130) s'étend le long de l'axe de rotation (D) et le tourillon de couplage (110) s'étend de manière excentrée par rapport à l'axe de rotation (D),
- le tourillon (130) est logé dans une ouverture de palier (152) de la paroi (150),
- le tourillon de couplage (110) est logé dans une coulisse de guidage (154) de la paroi (150) et dépasse de la coulisse de guidage (154),
- le deuxième composant de palier (160) comporte une première ouverture (161) dans laquelle est logé le tourillon (130), et une deuxième ouverture (162) disposée de manière excentrée par rapport à la première ouverture (161), dans laquelle est logé le tourillon de couplage (110),
- le tourillon (130) est relié au deuxième composant de palier (160) par un moyen d'accrochage, et
- le deuxième composant de palier (160) s'appuie sur le tourillon de couplage (110).

2. Ensemble de paliers (100) selon la revendication 1, où le deuxième composant de palier (160) s'appuie de manière élastique sur le tourillon de couplage (110).

3. Ensemble de paliers (100) selon la revendication 1 ou 2, où le premier composant de palier (140) et le deuxième composant de palier (160) s'appuient sur la paroi (150) sur des côtés opposés.

4. Ensemble de paliers (100) selon l'une des revendications 1 à 3, où le tourillon de couplage (110) comporte au moins un épaulement (112) sur lequel s'appuie le deuxième composant de palier (160).

5. Ensemble de paliers (100) selon l'une des revendications 1 à 4, où le tourillon (130) comporte un élément d'encliquetage qui présente, par rapport à une section de palier (132) se raccordant le long de l'axe de rotation (D), un diamètre supérieur au diamètre de la première ouverture (161) du deuxième composant de palier (160), et où l'élément d'encliquetage s'engage derrière la première ouverture (161) du deuxième composant de palier (160).

6. Ensemble de paliers (100) selon l'une des revendications 1 à 5, où le deuxième composant de palier (160) dans la zone de la première ouverture (161) est conçu de manière à être élastique dans la direction radiale et/ou le tourillon (130) est conçu de la même manière.

7. Ensemble de paliers (100) selon la revendication 5, où le premier composant de palier (140) et/ou la première ouverture (161) du deuxième composant de palier (160) présentent des biseaux (163) qui permettent d'insérer l'élément d'encliquetage plus facilement.

8. Ensemble de paliers (100) selon l'une des revendications 1 à 7, où le premier composant de palier (140) comporte un élément d'appui (146) orienté vers la paroi (150).

9. Ensemble de paliers (100) selon la revendication 5, où le deuxième composant de palier (160) comporte au moins deux sections d'appui (164) pour l'élément d'encliquetage, lesquelles peuvent être déplacées l'une par rapport à l'autre dans la direction axiale de la première ouverture (161).

10. Diffuseur d'air comprenant un boîtier et au moins un ensemble de paliers (100) selon la revendication 8 où le premier composant de palier (140) est conçu comme un élément de guidage d'air et le tourillon (130) et le tourillon de couplage (110) sont logés dans une ouverture de palier (152) et une coulisse de guidage (154) d'une paroi de boîtier du diffuseur d'air, et où le deuxième composant de palier (160) est conçu comme un levier et l'élément de guidage d'air est monté sans jeu sur la paroi de boîtier via le tourillon (130), le tourillon de couplage (110), l'élément d'appui (146), un élément d'appui (158) sur la paroi (150) et le moyen d'accrochage.
